(19) **Europäisches Patentamt**

**European Patent Office**

**Office européen des brevets**

(11) **EP 0 647 240 B1**

(12) **EUROPEAN PATENT SPECIFICATION**

(45) Date of publication and mention
of the grant of the patent:
**16.08.2000 Bulletin 2000/33**

(51) Int. Cl.[7]: **B29B 17/00**, C08J 11/10,
B06B 3/00, B29B 13/08,
C08C 19/08
// B29K21:00

(21) Application number: **93916558.5**

(22) Date of filing: **16.06.1993**

(86) International application number:
**PCT/US93/05758**

(87) International publication number:
**WO 94/00497 (06.01.1994 Gazette 1994/02)**

(54) **CONTINUOUS ULTRASONIC DEVULCANIZATION OF VULCANIZED ELASTOMERS**

KONTINUIERLICHE DEVULKANISIERUNG VON VULKANISIERTEN ELASTOMEREN DURCH ULTRASCHALL

DEVULCANISATION CONTINUE PAR ULTRASONS D'ELASTOMERES VULCANIQUES

(84) Designated Contracting States:
**AT BE CH DE DK ES FR GB GR IE IT LI LU MC NL
PT SE**

(30) Priority: **22.06.1992 US 902074**

(43) Date of publication of application:
**12.04.1995 Bulletin 1995/15**

(73) Proprietor:
**The University of Akron
Akron Ohio 44325 (US)**

(72) Inventors:
• **ISAYEV, Avraam
Akron, OH 44333 (US)**

• **JIANHUA, Chen
Akron, OH 44304 (US)**

(74) Representative:
**Wise, Stephen James et al
c/o RAWORTH, MOSS & COOK,
Raworth House,
36 Sydenham Road
Croydon, Surrey CR0 2EF (GB)**

(56) References cited:
**US-A- 3 725 314      US-A- 4 104 205
US-A- 4 168 295      US-A- 4 379 724
US-A- 5 006 266**

## Description

### *Technical Field*

This invention relates to an improved apparatus and method for continuous recycling of vulcanized elastomers and thermosets. More particularly, this invention relates to a continuous ultrasonic method for breaking the carbon-sulfur (C-S), sulfur-sulfur (S-S), and if desired, carbon-carbon (C-C) bonds in a vulcanized elastomer.

### *Background of the Invention*

It is currently estimated that about 200,000,000 used tires are produced annually. After the useful lifetime of these tires has expired, they are commonly dumped in waste disposal sites, but frequently are discarded on vacant land and in lakes and rivers because the used tires have no value and, in fact, cost money to dispose of properly.

In years past, it was possible for waste disposal sites and reclaiming plants to burn the tires and recover the metal or to dump them at a landfill. However, with increasing public awareness of ecology and the state of the environment, both the State Environmental Protection Agencies and the U.S. Government Environmental Protection Agency, have sought to eliminate this form of air and land pollution.

The most common traditional method for handling waste materials has been to simply dump the waste on designated land areas thereby creating large and often hazardous dumps in which fires are frequent and runoff into water sources is routine. Not only are these dumps eyesores, they are environmental hazards to both the air and water. It is of no little consequence that while dumps or landfills have often been the cheapest short term way of handling waste material, the land which can be used for this purpose is rapidly running out This is particularly true in the highly urbanized areas of the industrialized countries. This traditional method of disposing of waste does not allow for the recovery of materials.

A particular problem is found in the disposal of rubber based products, such as automotive tires, hoses and belts, all of which are comprised of natural or synthetic rubber reinforced with other materials such as metal belts and fibrous cords. These products have very little use after they have performed their original and/or primary task and therefore have generally discarded. It is acknowledged tat a certain number of tires are used to build retaining walls, guards protecting boating and similar things where resistance to weathering is desirable. However, a far greater number of tires, belts and hoses are simply discarded to become eyesores and breeding grounds for insects and other pests. Burying is particularly ineffective since these materials resist decomposition and tend to work their way to the surface.

There have been many proposals for handling waste materials so as to recover the component products. Same of these included burning off the unwanted material to get at the fire resistant residues or metal substructure. While this may seem to be an answer, it ignores the fact that much useful material would be consumed in burning, that the incineration process itself would not be energy efficient and could release hazardous byproducts into the atmosphere. It also ignores the problem of what to do with the ashes.

Other approaches to material recovery have included rendering the waste material into smaller pieces and then forcibly removing the desirable components. This may be a very difficult task when one considers recovery of material from something such as a tire, which is produced to withstand much abuse without loss of function. Even rendering a tire into smaller pieces would still not enhance the recovery of the metal, fiber and rubber products thereof. Besides a great amount of energy would be consumed in rendering the tire into the smaller pieces.

Still other approaches have involved the use of chemicals to break down the materials into their components. However, these methods create chemical sludges and residues which are not only a nuisance, if not impossible to dispose of, but some chemical treatments are dangerous to both human life and the environment.

Still additional approaches have involved the extensive use of cryogenics to lower the temperature of the product to below the glass-transition temperature of the components thereof. The product at this lowered temperature is then crushed sufficiently to cause the components to release sufficiently to effect separation. However, this in an energy intensive process.

The application of ultrasonic waves to the process of devulcanizing rubber is a most recent field. In fact, traditional thinking in the field has indicated that rubber is vulcanized by ultrasonics rather than devulcanized. Okada and Hirano published in *Meiji Gomu Kasei*, **9**(1), 14-21 (1987) that the ultrasonic vulcanization of rubber was achieved, and that process demonstrated in the laboratory.

Additionally, the use of ultrasound to activate rubber-based adhesives was discussed in *Kauch*. *Rezina*, (5), 31-2 (1983) where the bonding of rubber strips was described. The dynamic strength of the bonded rubber strips was found to increase with increasing ultrasonic activation time.

Again, the ultrasonic welding of composite polymers was discussed in *Svar*. *Proizvod*, (7), 42-3 (1982) where the ultrasonic welding of carbon black-filled rubber was determined to proceed via crosslinking between rubber and the carbon black molecules.

The vulcanization of rubber and crosslinking of polymers by ultrasound is elaborated in DE 2,216,594 published 10-26-72, based on Japanese priority document JP 71-20736 dated 4-6-71 wherein ethylene-propylene rubber or polybutadiene rubber-natural rubber mixtures; or polymers, e.g. polyethylene containing vulcanization agents or crosslinking agents were vulcanized or crosslinked, respectively, by ultrasonic waves (500 kHz) in a bath containing cold water or silicone oil.

The application of continuous ultra-high frequency vulcanization to high polarity rubbers, such as chloroprene rubber or butadiene-nitrile rubber is described, *Rubber World*, **162**(2), 59-63 (1970).

The only application of ultrasonic waves in a devulcanization mode is described in JP 62121741 (1987). A batch process was described wherein vulcanized rubber was reclaimed by devulcanization by 10 kHz to 1MHz ultrasonic wave irradiation. The batch process required 20 minutes using 50 kHz ultrasonic wave at 500 watts. The process was found to break carbon-sulfur bonds and sulfur-sulfur bonds, but not carbon-carbon bonds.

The devulcanization of sulfur-vulcanized elastomers containing polar groups by microwave irradiation which is sufficient to break carbon-sulfur and sulfur-sulfur linkages, but not any appreciable breakage of carbon-carbon bonds is discussed in US 4,104,205. The resulting product can be mixed with new rubber compositions and revulcanized with similar properties to new compositions. There is no teaching of the criticality of pressure and the patent teaches the use of microwaves to process the polar-group containing vulcanized rubbers.

A batch process for the recovery of waste rubber from old vehicle tires or high molecular weight plastics by reduction to a solution or fine suspension is disclosed in US 3,725,314. The water is immersed in a liquid hydrocarbon and engaged by an ultrasonic vibrating member operating at 10-40 KHz with an intensity greater than 100 W/cm$^2$. The process may be carried out in a trough where the material passes between opposed adjustable members which squeeze the waste between them. This process is a solvent-based extraction process and requires five minutes or more in order to achieve dissolution of the rubber or that minute rubber particles of uniform size were now evenly suspended in the mixture. There is no teaching of the criticality of pressure in the reaction, nor is there any teaching on how to convert this process into a continuous process.

### Disclosure of the Invention

This invention relates to a continuous ultrasonic method for breaking the carbon-sulfur (C-S), sulfur-sulfur (S-S), and if desired, carbon-carbon (C-C) bonds in a vulcanized elastomer. It is well known that vulcanized elastomers having a three-dimensional chemical network, cannot flow under the effect of heat and/or pressure. This creates a huge problem in the recycling of used tires and other elastomeric products. It was unexpectedly found that through the application of certain levels of ultrasonic amplitudes in the presence of pressure and optionally heat, the three-dimensional network of vulcanized elastomer can be broken down rather quickly. As a most desirable consequence, ultrasonically treated cured rubber, in the presence of pressure and optionally heat, becomes soft, thereby enabling this material to be reprocessed and shaped in a manner similar to that employed with uncured elastomers.

It is an object of the invention to detail a continuous process for the devulcanization of vulcanized elastomers, i.e., elastomers which contain a carbon-sulfur (C-S) or sulfur-sulfur (S-S) bond, and for the decrosslinking of crosslinked elastomers using ultrasound, pressure and optionally heat. The devulcanization or decrosslinking process is effected in the order of seconds or less.

In effecting the process, the apparatus, e.g., an extruder is fitted with a die having an exit bore which is populated with an ultrasonic horn. The apparatus can have a plurality of dies with exit bores, the die being positioned along a longitudinal axis of the extruder, oblique to this axis or transverse to the axis.

These and other objects of this invention will be evident when viewed in light of the drawings, detailed description, and appended claims.

### Statement of the Invention

This invention uses a reactor which effects devulcanization or decrosslinking of vulcanized or crosslinked elastomers by using ultrasound, pressure and optionally heat. The reactor, typically an extruder, is fined with a die which is populated with an ultrasonic horn. The ultrasonic horn is generally positioned external to the die and is along a longitudinal axis of the exit bore of the die. There can be multiple dies on the extruder, the positioning of which can be colinear with the longitudinal axis of the extruder, oblique with this axis or transverse to the axis. In one embodiment of the invention, the ultrasonic horn is positioned internal of the die to minimize the amount of oxidative degradation which occurs during the devulcanization.

### Brief Description of the Drawings

The invention may take physical form in certain parts and arrangements of parts, a preferred embodiment of which will be described in detail in the specification and illustrated in the accompanying drawings which form a part hereof, and wherein:

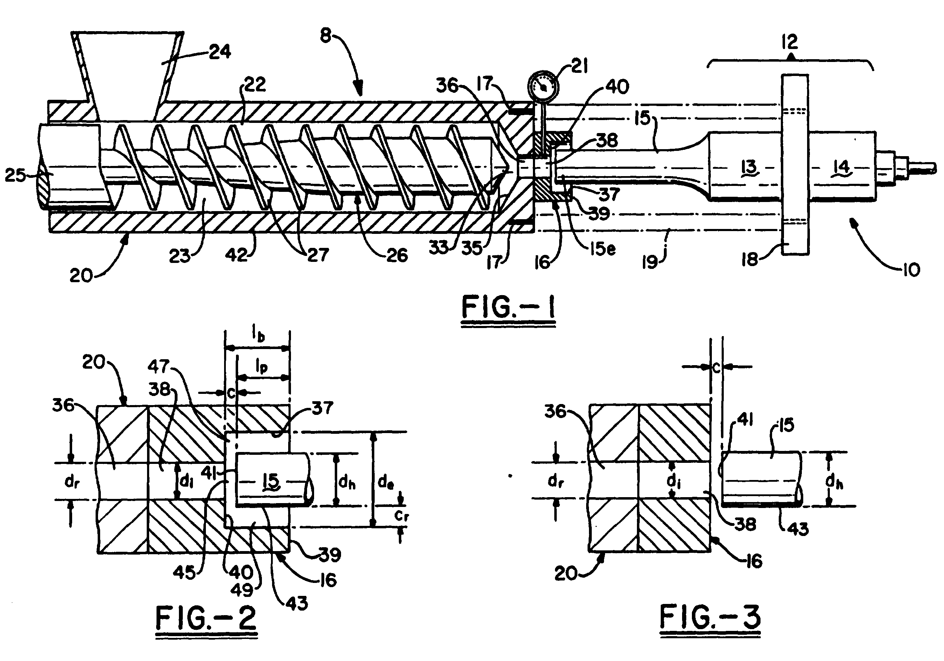

Figure 1 is an elevational view, in cross-section of the ultrasonic reactor along its longitudinal axis;

Figure 2 is an exploded cross-sectional plan view of the die of an ultrasonic reactor along its longitudinal axis, the die in this embodiment having a first die inlet bore and a second die exit bore;

Figure 3 is an exploded cross-sectional plan view of the die of an ultrasonic reactor along its longitudinal axis, the die in this embodiment having only a first die inlet bore;

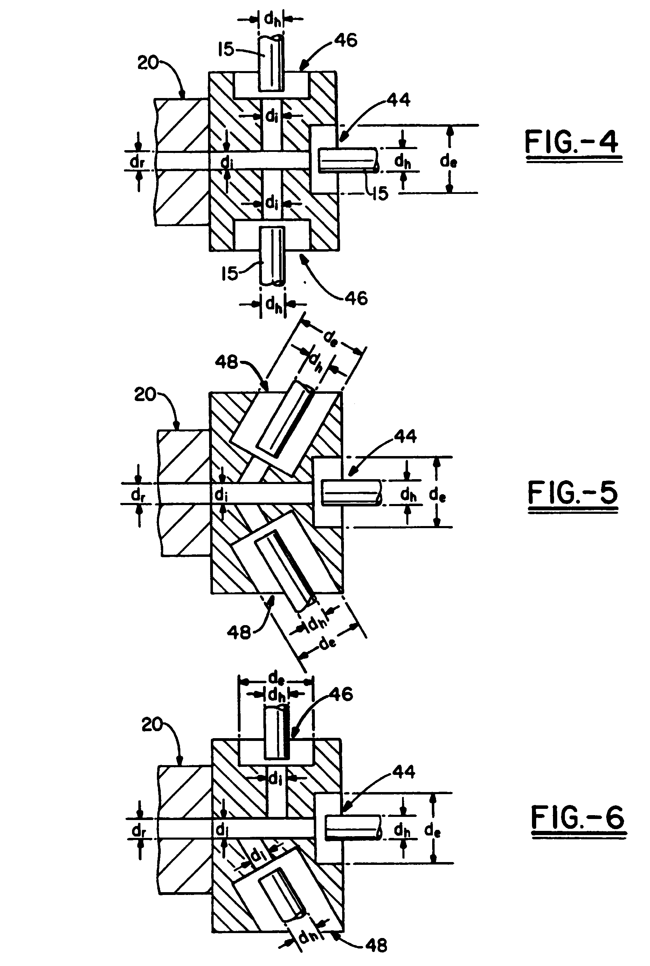

Figure 4 is an exploded cross-sectional view of an alternative configuration of the die of an ultrasonic reactor along its longitudinal axis showing a longitudinal die/horn combination and a radial die/horn combination, each die having a first die inlet bore and a second die exit bore;

Figure 5 is an exploded cross-sectional view of an alternative configuration of the die of an ultrasonic reactor along its longitudinal axis showing a longitudinal die/horn combination and an oblique die/horn combination, each die having a first die inlet bore and a second die exit bore;

Figure 6 is an exploded cross-sectional view of an alternative configuration of the die of an ultrasonic reactor along its longitudinal axis showing a longitudinal die/horn combination, a radial die/horn combination and an oblique die/horn combination, each die having a first die inlet bore and a second die exit bore;

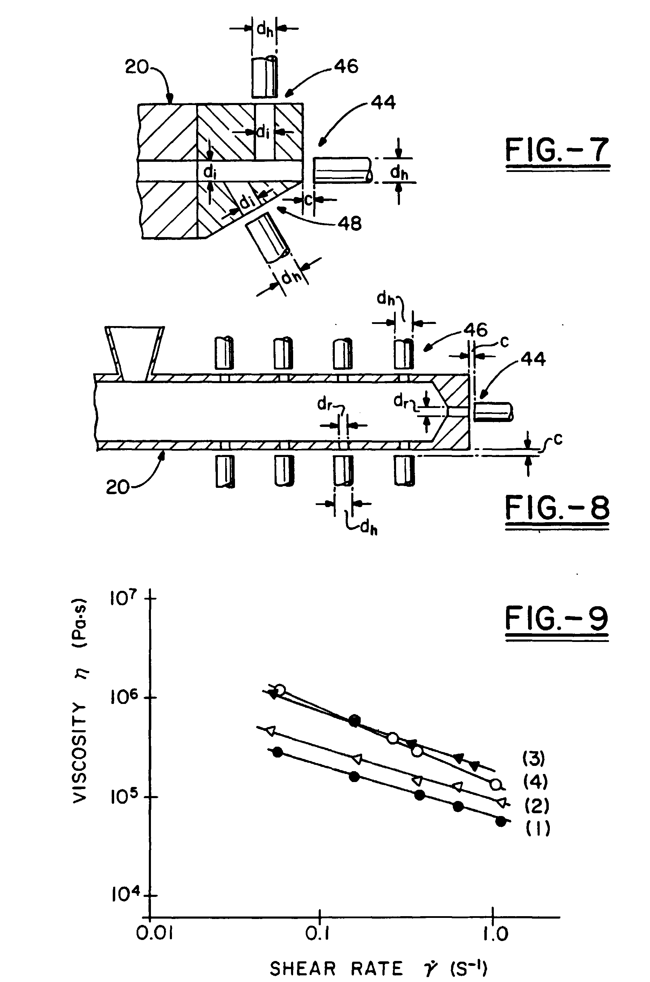

Figure 7 is an exploded cross-sectional view of an alternative configuration of the die of an ultrasonic reactor along its longitudinal axis showing a longitudinal die/horn combination, a radial die/horn combination, and an oblique die/horn combination, each die only having a first die inlet bore;

Figure 8 is a cross-sectional view of an alternative embodiment of the ultrasonic reactor along its longitudinal axis showing a plurality of radial die/horn combinations about the circumference of the reactor with a longitudinal die/horn combination, the reactor not being fitted with any die;

Figure 9 is a graph of viscosity vs. shear rate for vulcanized hydrogenated nitrile rubber pushed through the extruder and devulcanized at various speeds and pressures at a barrel temperature of 20000 and a clearance ($c=1_b-1_p$) of 0.5 mm as measured at 71°C and an ultrasonic wave amplitude of 96 $\mu$m; (1) 5 rpm 4.14 MPa (600 psi); (2) 15 rpm 8.27 MPa (1,200 psi); (3) 25 rpm 12.41 MPa (1,800 psi); and (4) uncured (unvulcanized) hydrogenated nitrile rubber;

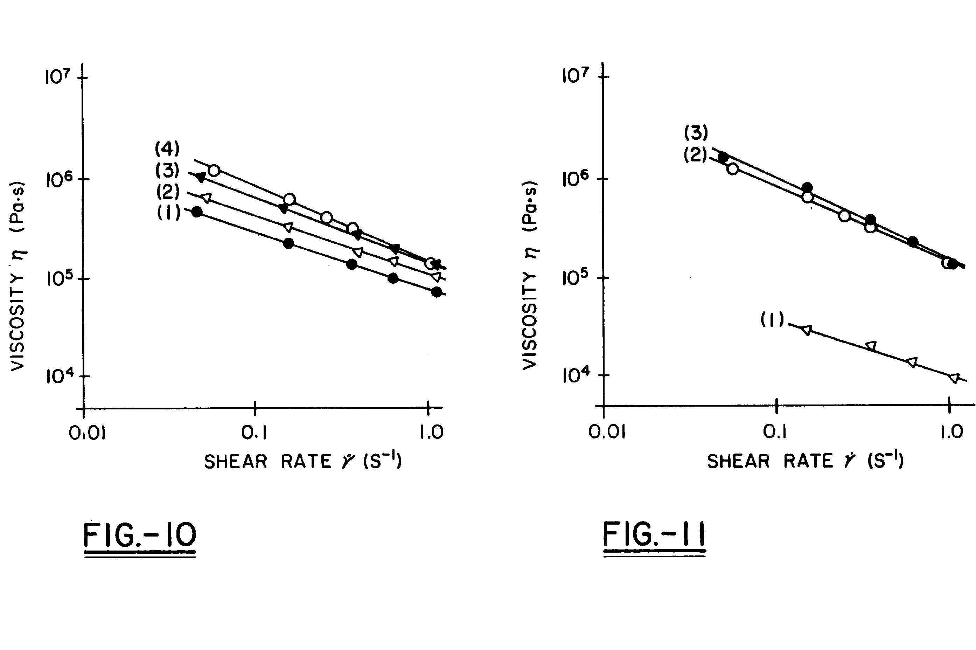

Figure 10 is a graph of viscosity vs. shear rate for vulcanized hydrogenated nitrile rubber pushed through the extruder and devulcanized at various speeds and pressures at a barrel temperature of 200°C and a clearance ($c=1_b-1_p$) of 0.5 mm as measured at 71°C and an ultrasonic wave amplitude of 82 $\mu$m: (1) 5 rpm 4.14 MPa (600 psi); (2) 10 rpm 4.83 MPa (700 psi); (3) 15 rpm 7.24 MPa (1,050 psi); and (4) uncured (unvulcanized) hydrogenated nitrile rubber;

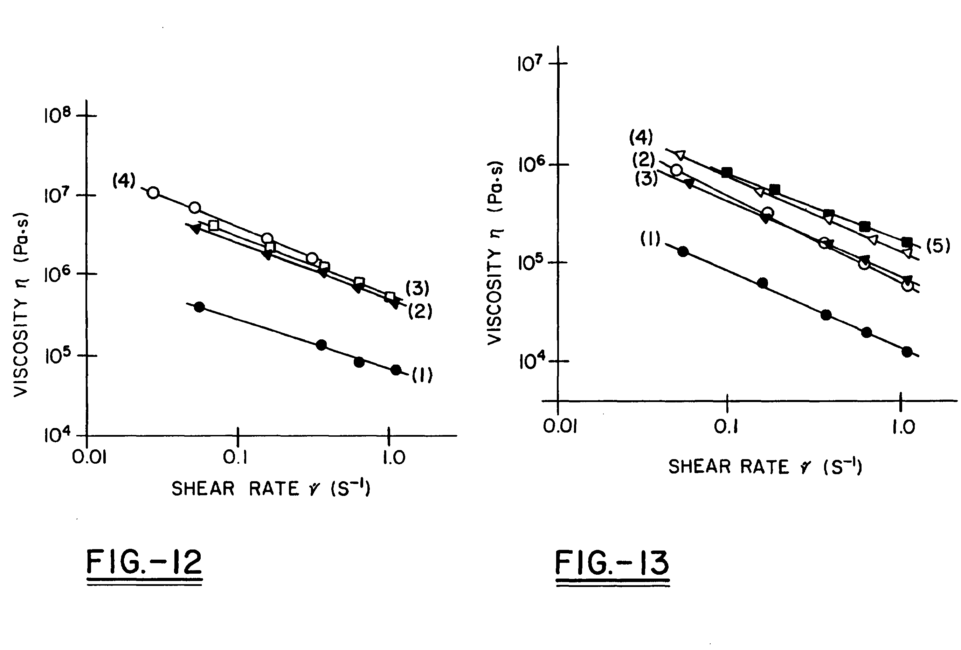

Figure 11 is a graph of viscosity vs. shear rate for vulcanized hydrogenated nitrile rubber pushed through the extruder and devulcanized at various speeds and pressures at a barrel temperature of 200°C and a clearance ($c=1_b-1_p$) of 0.5 mm as measured at 71°C and an ultrasonic wave amplitude of 37 $\mu$m; (1) 1 rpm 3.79 MPa (550 psi); (2) 5 rpm 8.27 MPA (1,200 psi); and (3) uncured (unvulcanized) hydrogenated nitrile rubber;

Figure 12 is a graph of viscosity vs. shear rate for a vulcanized fluoro-elastomer pushed through the extruder and devulcanized at various speeds and pressures at a barrel temperature of 175°C and a clearance ($c=1_b-1_p$) of 0.5 mm as measured at 71°C and an ultrasonic wave amplitude of 96 $\mu$m; (1) 2 rpm 3.79 MPa (550 psi); (2) 4 rpm 4.14 MPa (600 psi); (3) 6 rpm 4.83 MPa (700 psi); and (4) uncured (unvulcanized) fluoro-elastomer;

Figure 13 is a graph of viscosity vs. shear rate for vulcanized SBR/NR-based (styrene butadiene rubber/natural rubber) truck or passenger tire tread peel pushed through the extruder and devulcanized at various speeds, pressures and ultrasonic amplitudes at a barrel temperature of 100°C and a clearance ($c=1_b-1_p$) of 0.5 mm as measured at 71°C; (1) 2 rpm 2.41 MPa (350 psi), 96 $\mu$m; (2) 2 rpm 3.45 MPa (500 psi), 82$\mu$m; (3) 5 rpm 2.76 MPa (400 psi), 96 $\mu$m; (4) 5 rpm 4.14 MPa (600 psi), 82 $\mu$m; and (5) 8 rpm 3.45 MPa (500 psi), 96 $\mu$m;

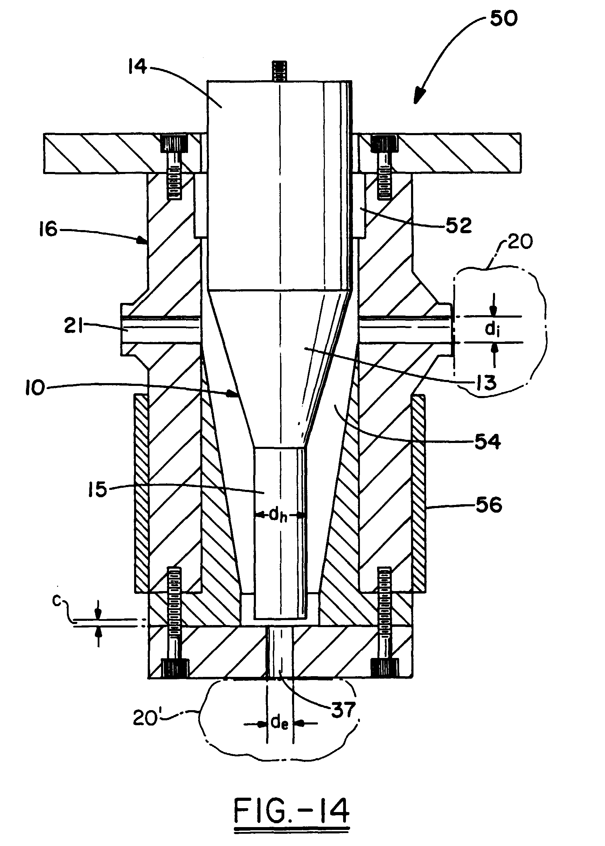

Figure 14 is an elevational view in vertical cross-section or a top plan view in horizontal cross-section, both being applicable to the apparatus illustrated, of an internal ultrasonic horn contained within an ultrasonic die attachment wherein the entry and exit bores may be interchangeable as desired;

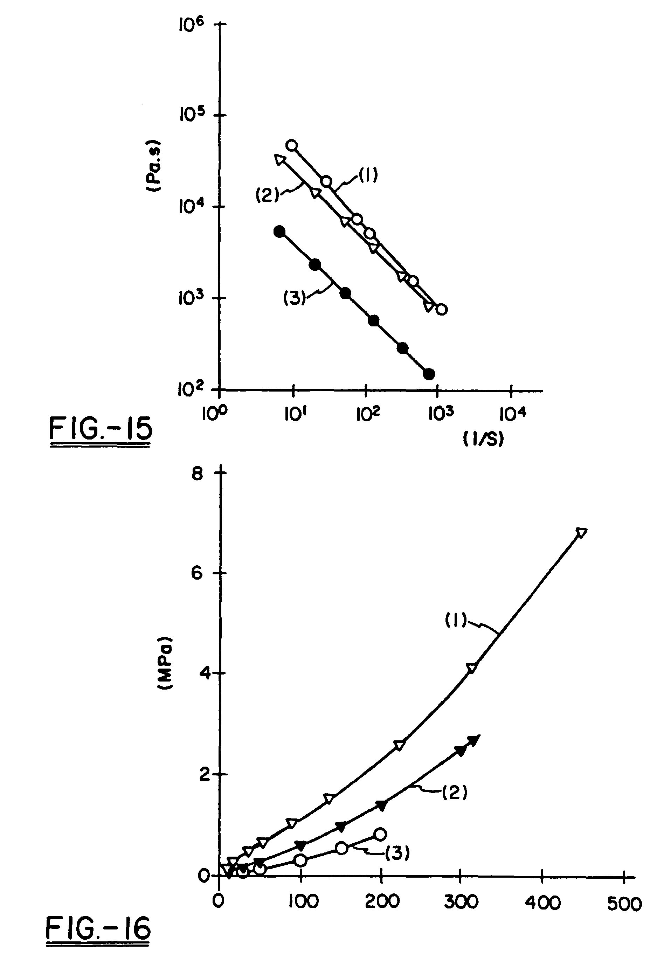

Figure 15 is a graph of viscosity vs. shear rate for original unvulcanized SBR (styrene butadiene) rubber (1); SBR rubber which was vulcanized and subsequently pushed through the extruder and devulcanized using both the external ultrasonic die configuration of Fig. 1 (3); and the internal ultrasonic die configuration of Fig. 14 (2), at a barrel temperature of 120°C, a clearance ($c=1_b-1_p$) of 0.5 mm as measured at 71°C, a screw rotation speed of 30 rpm, and an ultrasonic wave amplitude of 80 $\mu$m at 20 kHz;

Figure 16 is a graph of stress-strain curves for original unvulcanized SBR (styrene butadiene) rubber (1); SBR rubber which was vulcanized and subsequently pushed through the extruder and devulcanized using both the external ultrasonic die configuration of Fig. 1 (3); and the internal ultrasonic die configuration of Fig. 14 (2), at a barrel temperature of 120°C, a clearance ($c=1_b-1_p$) of 0.5 mm as measured at 71°C, a screw rotation speed of 20 rpm, and an ultrasonic wave amplitude of 80 $\mu$m at 20 kHz;

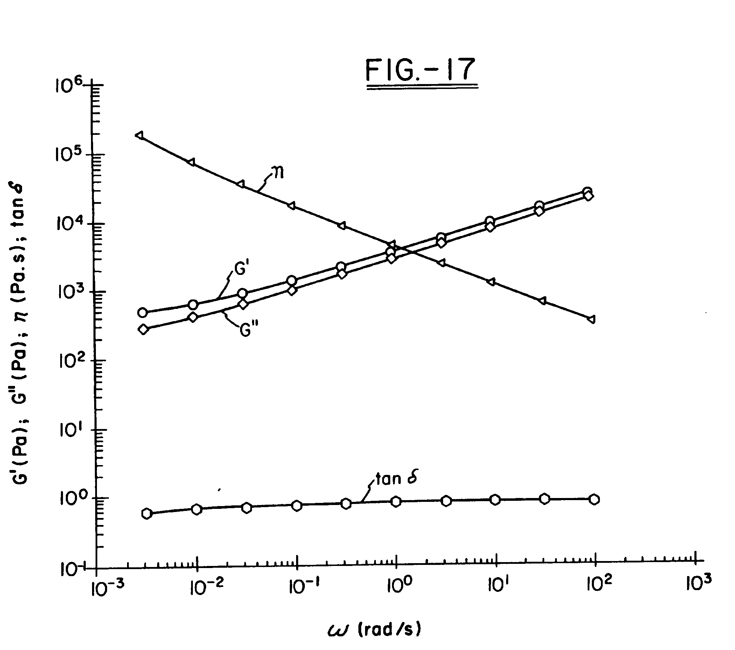

Figure 17 is a graph of storage modulus (G'), loss modulus (G''), absolute value of dynamic viscosity ($\pi^*$), and tan $\delta$ of decrosslinked ethylene vinyl acetate foam sheets using the internal ultrasonic die configuration of Fig. 14 at a barrel temperature of 200°C, a clearance ($c=1_b-1_p$) of 0.625 mm, a screw rotation speed of 2 rpm, and an ultrasonic wave amplitude of 105 $\mu$m at 20 kHz;

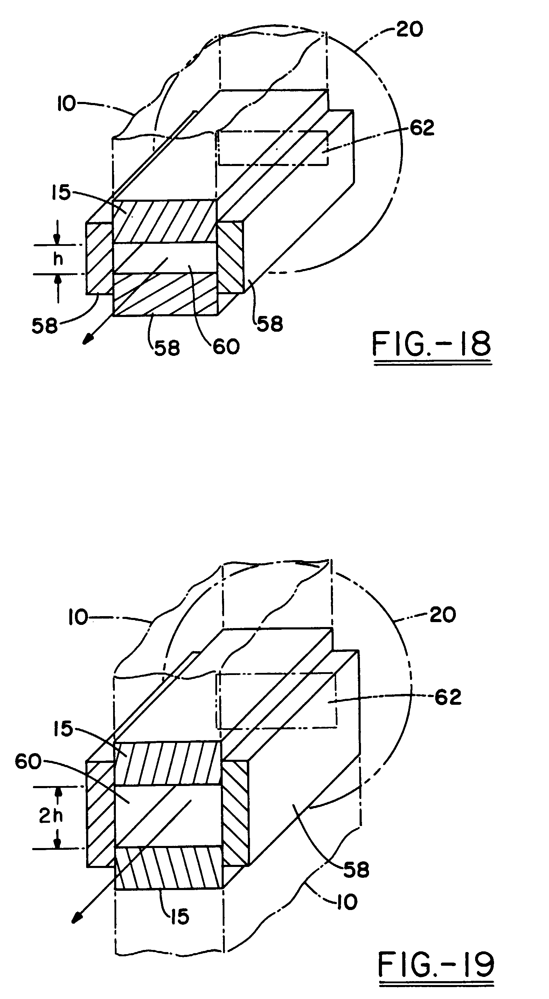

Figure 18 is an exploded perspective view, in cross-section of an alternative design, illustrating a non-rounded ultrasonic horn/die configuration wherein one ultrasonic horn is positioned between walls of a die in parallel planes to the longitudinal axis of the reactor, and

Figure 19 is an exploded perspective view, in cross-section of an alternative design, illustrating a non-rounded ultrasonic horn/die configuration wherein two ultrasonic horns are positioned between walls of a die in parallel planes to the longitudinal axis of the reactor.

### Detailed Component Part List

| Part Number | Description |
| --- | --- |
| 10 | ultrasonic generator |
| 12 | transducer |
| 13 | booster |
| 14 | converter |
| 15 | horn |
| 16 | die |
| 17 | mounting holes |
| 18 | mounting bracket |
| 19 | adapter legs |
| 20 | reactor |
| 21 | pressure gauge |
| 22 | barrel |
| 24 | hopper |
| 25 | drive |
| 26 | reactor screw |
| 27 | spiral ridges on shaft |
| 28 | motor (not shown) |
| 36 | reactor exit bore |
| 37 | die exit bore |
| 38 | die inlet bore |
| 39 | termination point of die |
| 42 | heating jacket |
| 44 | longitudinal die/horn combination |
| 46 | radial die/horn combination |
| 48 | oblique die/horn combination |
| 50 | internal die/horn combination |

(continued)

| Part Number | Description |
|---|---|
| 52 | gasket |
| 54 | die void space |
| 56 | die heating and/or cooling coils |
| 58 | die wall |
| 60 | devulcanization zone entry |
| 62 | devulcanization zone exit |
| c | clearance between the exit point of the die inlet bore and the tip of the horn |
| $d_e$ | die exit bore diameter |
| $d_h$ | horn cross-section diameter |
| $d_i$ | die inlet bore diameter |
| $d_r$ | reactor exit bore diameter |
| h | height between ultrasonic horns |
| $l_b$ | die exit bore depth |
| $l_p$ | depth of insertion of ultrasonic horn section measured from the termination point of the die. |

## Detailed Disclosure of the Invention

Referring now to the drawings wherein the showings are for purposes of illustrating the preferred embodiment of the invention only and not for purposes of limiting the same, the Figures show the effective application of ultrasound to the continuous devulcanization of rubbers.

It is well known that vulcanized elastomers having a three-dimensional chemical network, cannot flow under the effect of heat and/or pressure. It is precisely for this reason that to date, no literature has described the utilization of an extruder in order to further process a vulcanized rubber. This physical property has prohibited the application of extruder technology to the huge problem of recycling used tires and other vulcanized elastomeric products.

However, it has been discovered that trough the application of certain levels of ultrasonic amplitudes in the presence of pressure, and optionally heat, the three-dimensional network of vulcanized elastomer can be broken down. As a most desirable consequence, ultrasonically treated cured rubber becomes soft, thereby enabling this material to be reprocessed and shaped in a manner similar to that employed with uncured elastomers.

Figure 1 is a semi-schematic representation of a reactor (e.g. an extruder) or any device which can transport vulcanized rubber while simultaneously exerting pressure on it, generally 20, connected to an ultrasonic die assembly, generally 10, of the invention. As shown, the die assembly 10 consists of a transducer portion 12, which includes a power converter 14 and booster 13, connected to a horn portion 15, the assembly being supported by mounting bracket 18, and being attached to the reactor 20 through an adaptor portion 19. The reactor 20 includes a barrel 22, fed through hopper 24, the screw 26 within the barrel portion being driven by a drive 25, energized by a motor 28 (not shown). The horn portion 15 includes a die portion 16 through which the devulcanized elastomer being extruded is forced at a pressure shown by a pressure gauge 21.

Additionally shown in Figure 1 is ultrasonic generator 10 of the ultrasonic die of the invention, movably attached by mounting bracket 18 trough adaptor legs 19 to a reactor 20. As more clearly shown in Figure 2, the horn portion 15 of the ultrasonic die is shown penetrating to a depth $l_p$ into the die 16 of exit bore depth $l_b$. The distance between $l_p$ and $l_b$ is critical for the effective operation of the devulcanization process and the difference between the value of $l_p$, the horn penetration depth, subtracted from $l_b$, the exit bore depth defines a clearance c through which rubber particles are extruded. If this clearance $(l_b-l_p)$ is larger than the rubber particle size, some particles of vulcanized rubber will escape without being devulcanized. On the other hand, if the clearance is too small, the pressure generated in the reactor exit bore may increase and lead to an inability to initiate the ultrasonic generator. There exists some optimal clearance which is dependent upon the size of the rubber particles and/or the thickness of the rubber shreds, and the ultrasonic amplitude, within which optimal conditions of devulcanization can be achieved. In particular, optimal conditions of devulcanization can be achieved when the clearance is between 0.2-0.8 mm, but lower and larger clearances are envisioned.

Additionally, the horn cross-section diameter $d_h$ vis-a-vis the die inlet bore diameter $d_i$ is critical. If the horn

cross-section diameter $d_k$ is less than the die inlet bore diameter $d_i$, then particles of vulcanized elastomer are allowed to pass through die exit bore diameter $d_e$ without any significant devulcanization. In a preferred mode, the relationship will be that the diameter of reactor exit bore $d_r$ will closely approximate the die inlet bore diameter $d_i$. Additionally, the ultrasonic horn diameter $d_h$ will be greater than die inlet bore $d_i$, but yet be less than die exit bore $d_e$.

The energy imparted by the ultrasonic waves in the presence of pressure and optionally heat, imposed on the vulcanized rubber are believed responsible for the fast devulcanization. Thus both wave frequency, as well as amplitude are important processing parameters.

While a die possessing two distinctly different bore diameters $d_e$ and $d_i$, has been described so far, the invention is not limited to such. Since the key parameter is the relationship between the horn diameter $d_h$ and the die inlet bore $d_i$, there is no need to have a second exit bore diameter $d_e$. Figure 3 illustrates this embodiment of the invention.

While an ultrasonic reactor has been generally described so far containing mainly a single die with a single horn inserted therein, there is no reason to limit the invention to such. As shown in Figures 4-7, multiple combinations of die configurations, in so far as to both the positioning and the number of die/horn combinations are envisioned. The key parameter is tat all of the horn/die combinations be co-axial to the longitudinal plane of the zone of devulcanization. With respect to the additional die/horn combinations which are positioned around a reactor exit bore, there is no limit on the upper number of these combinations other than that which is a natural ramification of available space considerations. As seen in Figure 4, the reactor can be equipped with longitudinal die/horn combinations 44 and radial die/horn combinations 46. Figure 5 illustrates the ability to incorporate longitudinal die/horn combinations 44 with oblique die/horn combinations 48. And Figure 6 shows a die configuration wherein a longitudinal die/horn combinations 44 is positioned in concert with a radial die/horn combination 46 and an oblique die/horn combination 48. Figure 7 illustrates the ability to perform the invention with a die possessing only a die inlet bore $d_i$.

In a similar manner to the relationship between the dies shown in Figures 2 and 3, when multiple dies are utilized, such as in Figures 4 - 7, there is also no necessity for the dies to have dies possessing two different bore diameters. As wit the single die configuration, since the key parameter is the relationship between the horn diameter $d_h$ and the die inlet bore $d_i$, there is no need to have a second exit bore diameter $d_e$. Figure 7 illustrates this embodiment of the invention.

In another embodiment of the invention, and since the diameter of the reactor exit bore $d_r$ closely matches the die inlet bore diameter $d_i$, in some instances, for reactors which have been specifically designed for this purpose, there is no need for a die attached to an exit bore. This arrangement is shown in Figure 8. In this arrangement, a plurality of radial die/horn combinations 46 are situated at the periphery of the circumference of the longitudinal axis of reactor 20. As with the previous arrangements, the clearance between the periphery of the reactor exit bore and the tip of the ultrasonic horn is positioned at a distance which is maximized by experiment. Typically this clearance is between 0.2 mm - 0.8 mm, although both larger and smaller clearances are envisioned under appropriate conditions. Unlike previous embodiments described, there is no absolute need to position a die/horn combination at the reactor exit bore, and in this embodiment, the longitudinal die/horn combination is optional.

Considerable latitude is permissible in selecting the wave frequency and amplitude, and as suggested in the preceding, optimum conditions for a particular polymer are best determined by experimental trials conducted on the rubber of interest. Within such considerations, however, it has been found that the frequency of the waves should be in the ultrasonic region, i.e., at least 15 kilohertz, and a range of from about 15 kHz to 50 kHz is preferable. The amplitude of the wave can be varied up to an amplitude of at least about 10 microns to about 200 microns, again, the exact amplitude and frequency best suited for a particular application being readily determined by experimentation.

The exact location of the point of attachment of the mounting bracket 18 and the length of adaptor legs 19 in relation to the horn 15 is important It has been determined that depth to which the tip of the horn 15 is inserted into the die exit bore $d_e$ is determined by the devulcanization characteristics of the compound, and particularly on its ability to dissipate ultrasonic energy. In a preferred embodiment, the distance separating the tip of the ultrasonic horn 15 and the terminal point of the die inlet bore $d_i$ is about 0.2-0.8 mm, but larger and smaller clearances are possible.

The reactor is surrounded by a heating jacket 42 which may depend upon electrical heating elements, or heat transfer media of the type well known in the art. The purpose of the jacket is to lower the pressure within the reactor generated by the vulcanized elastomeric particles which are pushed to the reactor exit bore $d_r$. In an unheated mode, the reactor pressure at the extruder exit bore $d_r$ becomes inordinately high leading to overload of the ultrasonic wave generator.

In an alternative embodiment, the most preferred embodiment known to the inventors to date and shown in Fig. 14, the ultrasonic horn / die combination 50, illustrates that, unlike the configuration shown initially in Fig. 1, the ultrasonic horn 10 is positioned internally in die 16. Vulcanized material is fed into die 16 through reactor bore exit 36 of exit bore diameter $d_r$ and into die inlet bore 38 of diameter $d_i$. Positioned transverse to the longitudinal axis of reactor 20 is ultrasonic generator 10 containing transducer 12 with components converter 14 and booster 13, and horn 15. The vulcanized material is moved under pressure through internal die void space 54 toward die exit bore 37 due to the forward pressure generated by reactor screw 26 within reactor 20. Movement of the vulcanized material is precluded from migration toward the converter end 14 of ultrasonic generator 10 by the presence of gasket 52 which sealingly prohibits the flow of material. The gasket material can be of any composition which effects a pressure-tight seal, and often is made of teflon. The die pressure is measured via pressure gauge 21. The die is optionally heated and/or cooled, depending upon the material to be devulcanized or material to be decrosslinked. While the positioning of the ultrasonic horn is shown transverse to the longitudinal axis of the reactor, it is equally possible to position the ultrasonic horn at oblique angles to the longitudinal axis of the reactor.

As the vulcanized material approaches the tip of horn 15, the material flows into the path of the ultrasonic waves generated by the horn due to the diameter of the horn $d_h$ being larger than that of die exit bore $d_e$. The internal arrangement of the horn within the die allows the devulcanization to proceed in an environment which is not exposed to atmospheric oxygen, thereby minimizing the amount of product degradation which might otherwise occur with for example, the arrangement shown in Fig. 1.

As discussed previously in association with Fig. 1, the clearance, c, preferred between the tip of horn 15 and the beginning of die exit bore 37 is between 0.2 - 0.8 mm, but larger and smaller clearances are envisioned. The clearance necessary being a function of the speed of the reactor screw, with associated generated pressure. Additionally, the horn cross-sectional diameter $d_h$ will preferably be greater than die exit bore $d_e$. In this configuration, particles of the vulcanized elastomer would be required to pass through die exit bore under sufficient pressure and in the ultrasonic wave path to insure devulcanization.

While a preferred embodiment has be described in regard to Fig. 14, it is envisioned that when the ultrasonic horn is internal of the die, the designations of die inlet and die exit bores can be interchanged and that it is equally possible to operate the devulcanization reaction when the vulcanized material is fed from reactor 20' (analogous to reactor 20), through die exit bore 37 and leaves through the inlet bore 38 of Fig. 14.

In Fig. 18, an alternative embodiment of the ultrasonic horn/die is shown wherein one non-circular ultrasonic horn 10 is positioned along parallel planes to the longitudinal axis of the reactor 20. The ultrasonic horn is separated by a height, h from its opposed die wall. In order to effect the devulcanization and/or decrosslinking reaction, it will be seen, from the previous discussions, that similar constraints to that imposed on the definition of the clearance, c, are correspondingly applicable to the height, h. In general, the value of the height will be essentially that previously defined for c, thereby permitting material to be processed through the parallel-spaced ultrasonic horn by the ingress through devulcanization zone entrance and egress through the devulcanization zone exit.

In Fig. 19, an alternative embodiment of the ultrasonic horn/die is shown wherein two non-circular ultrasonic horns 10 is positioned along parallel planes to the longitudinal axis of the reactor 20. The ultrasonic horns are separated by a height, h from their opposed surfaces. In order to effect the devulcanization and/or decrosslinking reaction, it will be seen, from the previous discussions, that similar constraints to that imposed on the definition of the clearance, c, are correspondingly applicable to the height, h. In general, the value of the height will be essentially, twice the value for the clearance, thereby permitting additional material to be processed through the parallel-spaced ultrasonic horns by the ingress through devulcanization zone entrance and egress through the devulcanization zone exit.

Examples

Samples of hydrogenated nitrile rubber (HNBR) containing 50 parts of carbon black, 25 parts clay, and various other additives (e.g. accelerator, antioxidant, and curatives known to those skilled in the art), and fluorocarbon polymer (FCP) containing 30 parts silica and various other additives known to those skilled in the art, were vulcanized by using a compression molding technique. The compositions were compression molded and vulcanized into slabs. Specifically, the following conditions were employed.

HNBR    177°C, 350°F for 5 minutes at 250 PSIG, 1.72 MPa.
FCP     177°C, 350°F for 5 minutes at 250 PSIG, 1.72 MPa followed by 232°C, 450°F for 10 hours in an oven.

The vulcanized slabs were subsequently cut into pieces or strands of nominal size approximately (15mm x 5 mm x 3mm) and pieces placed in the hopper of a one inch single screw extruder for thermoplastics operating at various rotation speeds detailed in the following examples and extruded through a 0.5 mm die clearance under pressure, with an ultrasonic horn of 12.7 mm diameter operating at 20 kHz and various wave amplitudes. While the following examples used primarily pieces of vulcanized rubber, the use of longer or shorter strands and/or particles is envisioned.

After passing the vulcanized elastomers through the heated extruder operating at 200°C and 175°C for HNBR and FCP, respectively, the devulcanized elastomers were collected and analyzed. In order to perform the analysis, a sample was prepared from the collected material by compression molding at room temperature for 10 minutes at approximately 1.72 MPa 250 psig. The viscosity characteristics of the devulcanized compounds were measured.

The viscosity vs. shear rate measurements were made at 71°C using a modified multi-speed Mooney rheometer (Monsanto).

Example 1

A series of devulcanization runs were performed on hydrogenated nitrile rubber compound. Pieces of this material were fed into the extruder operating at a barrel temperature of 200°C and a die clearance of 0.5 mm and an ultrasonic wave amplitude of 96 μm at 20 kHz. The extruder screw was operated at speeds of (1) 5 rpm; (2) 15 rpm; and (3) 25 rpm. Pressure generated by the extruder were 4.14 MPa 600, 1,200 8.27 MPa and 1,800 psi 12.41 MPa respectively. For comparative purposes, an uncured hydrogenated nitrile rubber compound (4) was tested. The results are graphed in Figure 9 as a series of plots on a graph of the log of the viscosity (π) vs. the log of the shear rate (γ).

As is seen in Figure 9, reference compound (4) illustrates a base comparative case of the original unvulcanized material. Evident in viewing the curves for compounds (1), (2), and (3), the application of ultrasonic waves of amplitude 96 μm has totally devulcanized the materials. Additionally seen from the figure is the fact that the lower the screw rotation speed, the greater the degree of carbon-carbon bond breaking. This is shown in the lowered position of the curves in relation to the base comparative case (4). The application of ultrasonics has not only devulcanized the material, but also lowered the molecular weight of the elastomer, indicating the breaking of carbon-carbon bonds within the polymeric chain.

The lower the rotation speed of the screw, which translates to a longer residence time of the elastomer in the ultrasonic field, the greater the degree of depolymerization

Example 2

To test the effect of the ultrasonic wave amplitude, a series of runs were made at a lowered amplitude of 82 μm for screw speeds of (1) 5 rpm 4.14 MPa (600 psi); (2) 10 rpm 4.83 MPa (700 psi); and (3) 15 rpm 7.24 MPa (1,050 psi). The samples were prepared in a manner analogous to Example 1. As shown in Figure 10, a similar set of data was obtained indicating the effectiveness of the ultrasonic treatment at a lowered amplitude.

Example 3

The ultrasonic wave amplitude was decreased further to 37 μm in a series of runs plotted in Figure 11 for screw speeds of (1) 1 rpm 3.79 MPa (550 psi) and (2) 5 rpm 8.27 MPa (1,200 psi), and generated in a manner similar to that employed with Example 1. As illustrated in the graph, the data clearly indicates that lower wave amplitudes, coupled with longer residence times cooperatively interact to facilitate not only devulcanization, but to also significantly depolymerize the elastomer as shown at a revolution speed of 1 rpm.

Example 4

A series of devulcanization runs were performed on fluorocarbon elastomer compound. Pieces of this material were fed into the extruder operating at a barrel temperature of 175°C and a die clearance of 0.5 mm and an ultrasonic wave amplitude of 96 μm at 20 kHz. The extruder screw was operated at speeds of (1) 2 rpm; (2) 4 rpm; and (3) 6 rpm. Pressures generated by the extruder were 3.79 MPa 550, 600 4.14 MPa and 700 psi 4.83 MPa respectively. For comparative purposes, an uncured fluorocarbon elastomer compound (4) was tested. The results are graphed in Figure 12 as a series of plots on a graph of the log of the viscosity (π) vs. the log of the shear rate (γ).

As is seen in the Figure, reference compound (4) illustrates a base comparative case when the material is unvulcanized. Evident in viewing the curves for compounds (1), (2), and (3), the application of ultrasonic waves of amplitude 96 μm has once again, totally devulcanized the materials. Additionally seen from the figure is the fact that the lower the screw rotation speed, the greater the degree of carbon-carbon bond breaking. This is shown in the lowered position of the curve observed for a screw speed of 2 rpm in relation to the base comparative case (4). The application of ultrasonics has not only devulcanized the material, but also lowered the molecular weight of the elastomer, indicating the breaking of carbon-carbon bonds within the polymeric chain.

The lower the rotation speed of the screw, which translates to a longer residence time of the elastomer in the ultrasonic field, the greater the degree of depolymerization.

Example 5

To test the effectiveness of the technique on a passenger car tire tread compound, a sample of vulcanized rubber based on styrene-butadiene rubber/natural rubber compound was obtained from Rondy Inc., Akron, Ohio. The particle size of the material was nominally 0.1 - 0.05". Pieces of this vulcanized material were fed into the extruder operating at a barrel temperature of 100°C and a die clearance of 0.5 mm and ultrasonic wave amplitudes of 96 μm and 82 μm at 20 kHz. The extruder screw was operated at various speeds of 2 rpm, 5 rpm, and 8 rpm at various pressures. As is evidenced by the fact that these materials exhibit flow curves at all (Figure 13), is strong evidence that devulcanization has occurred since the original vulcanized SBR/NR-based material does not flow at all. Based upon the previous figures, it is anticipated that some amount of carbon-carbon bond breaking has also occurred.

Example 6

A sample of styrene-butadiene rubber (SBR) containing curatives, was vulcanized at 170°C for 12 min. in a compression molding press at about 1.72 MPa 250 psig and quenched in a mold having internal dimensions of 20 x 20 x 0.3 cm$^3$. Prepared plates were cut into pieces which were fed into a single screw extruder with an external (Fig. 1) and internal (Fig. 14) ultrasonic horn/die configuration. The reactor barrel temperature was 120°C with a screw rotation speed of 30 rpm. The die clearance was 0.5 mm and ultrasonic waves of 80 pm at 20 kHz. An ultrasonic horn diameter of 12.7 mm was used and the inlet diameter into the zone of devulcanization was 19 mm. The outer diameter for the extrudate was 6.35 mm. During passage through the clearance, the vulcanized SBR was devulcanized, collected and analyzed.

The viscosity of the devulcanized SBR rubber obtained by using the external and internal dies, as well as the viscosity of the original unvulcanized SBR rubber were measured using a modified multi-speed Mooney rheometer (Monsanto). The results are shown in Fig. 15 as a series of plots of the log of the viscosity vs. the log of the shear rate. As shown in the Figure, the viscosity of devulcanized SBR rubber obtained with the internal die arrangement is higher than that obtained with the external arrangement This indicates that there is less degradation taking place simultaneously with the devulcanization reaction.

The devulcanized SBR rubber was subsequently mixed with curatives and vulcanized again in a compression molding press at the same conditions as in the first vulcanization. Rubber plates were prepared which were subsequently cut into strips for the stress-strain measurements. These measurements were performed wing a Monsanto Tensiometer. Fig. 16 shows the stress-strain curves for the original vulcanized SBR rubber and revulcanized SBR rubber which was devulcanized previously in both the external and internal horn/die configuration. It is clearly seen that the SBR rubber devulcanized in the internal horn/die arrangement, and then subsequently revulcanized, has the better stress-strain characteristics than the SBR rubber which had been devulcanized in the external horn/die arrangement, and then subsequently revulcanized.

Example 7

Crosslinked ethylene vinyl acetate foam sheets (Evalite 3S), supplied by Monarch Rubber Company were cut into strands and fed into a single screw extruder with ultrasonic die attachment. A barrel and die temperature were maintained at 200°C. A screw rotation of 2 rpm was used with a die clearance of 0.625 mm and ultrasonic wave amplitude of 105 μm at 20 kHz, an ultrasonic horn of 12.7 mm diameter was used. The inlet diameter into the zone of decrosslinking was 19 mm and the outlet diameter for the extrudate was 6.35 mm. The collected decrosslinked material was a solid at room temperature. This decrosslinked material was compression molded into sheets of dimensions 15 x 10 x 0.2 cm$^3$ at a temperature of 175°C, using a preheating time of 5 min. and a holding time of 5 min. at 31.03 MPa 4,500 psig. The ability of the decrosslinked material to be molded is a strong indication that the material can flow. From these sheets, disks of 2 cm diameter were punched for rheological studies by means of a Rheometrix Mechanical Spectrometer. Various frequencies and constant amplitude (3%) were used at a temperature of 125°C. As shown in Fig. 17, the decrosslinked material showed rheological behaviour typical of flowable thermoplastics as indicated by the storage modulus (G'), loss modulus (G''), absolute value of dynamic viscosity (π*), and tan δ of the decrosslinked material.

Discussion

As is evident from Figures 9-13, and 15-17, the devulcanization of rubbers and decrosslinking of crosslinked polymers, occurs rapidly, and quantitatively. In all instances, comparisons of the curve generated for unvulcanized material, with that generated from material which had been processed (devulcanized), indicated that the processed material curves never exceeded the unvulcanized standard. The occurrences of the lowered positioning of the curves in the Figures in relation to the unvulcanized standard, is due to the possibility of additionally breaking carbon-carbon bonds in the polymer if desired. The amount of carbon-carbon bond breakage is a controllable parameter and is dependent upon the factors of pressure and most particularly, on the residence time that the material spends in the zone of devulcanization. Devulcanization occurs very fast, typically within 0.1 - 10 seconds.

The type of rubber which is devulcanized can be of the polar or non-polar type. Without being limited to any enumerated list, some representative types of polar rubbers which are contemplated within the scope of this invention are chloroprene and nitrile rubbers. Again without being limited to any enumerated list, some representative types of non-polar rubbers which are contemplated within the scope of this invention are styrene-butadiene rubbers (SBR), natural rubber, ethylene-propylene rubbers, butadiene rubbers, isoprene rubbers, butyl rubbers, silicone rubbers and fluorocarbon rubbers.

While the initial focus of the discussion has been directed to the continuous devulcanization of rubbers, the invention is not limited to such. It is within the scope of this invention to include the application of ultrasonic waves to the breaking of 3-dimensional crosslinked polymeric networks in thermosets. Without being limited to the enumerated examples, a few representative systems would include polyurethanes, epoxy/phenolic resins, epoxy resins, saturated polyester resins, unsaturated polyester resins, phenolic/formaldehyde resins, etc.

While the figures and ensuing discussion have focused in particular on the application of an extruder to move the original vulcanized material to the extruder exit bore, there is no reason to limit the invention to such. In fact, the only requirements essential for the extruder section of the reactor is that it be capable of moving material under pressure toward the reactor outlet bore and into a receiving die inlet bore. Optionally, the reactor should be capable of being heated. The heating of the reactor tends to decrease the internal pressure generated at the exit bore of the reactor, and reduction of power consumption of the motor.

In its simplest mode of operation, the reactor is fitted at its exit bore with a die having one inlet bore and one exit bore. However, there is no reason to limit the invention to such. It is contemplated and within the scope of the invention to utilize multiple die inlet and exit bores originating off a common die receiving bore. When used in this fashion, it becomes possible to increase the throughput (amount of devulcanized material collected in a unit of time) significantly. One of the simplest methods of accomplishing this is to include additional exit bores positioned radially around the die. However, it is contemplated within the scope of the invention that other positioned dies and horns are possible. The key element is the alignment of the longitudinal axis of the ultrasonic horn with the axis of the exit bore of the reactor and/or inlet bore of the die.

While in describing the term die in this application, the term has been used to denote a separate component of the apparatus, there is no need to specifically limit the concept as such. In fact, it is quite possible that a device could be constructed which incorporates a die into the physical unit itself, without to need for any separate component. However, for ease of cleaning and routine maintenance, it is anticipated tat the die would typically be a separate unit attached to to exit bore of to reactor.

It is also possible and within the scope of the invention to omit to die portion attached to the extruder. When in this configuration, to key parameter is that the diameter of the horn be larger than that of the exit bore of the reactor. The die arrangement is typically used for convenience in adapting existing equipment (i.e. extruders) to this application.

While the configuration of the die and/or reactor exit bore has been generally referred to as cylindrical or spherical in shape, there is no reason to limit the invention to such. It is possible to use other geometrically shaped dies and/or reactor exit bore shapes with the invention. Without being limited, it is contemplated that other geometrical shapes, such as rectangular slits, oval slits, etc., can be effectively used in the application. It is also within the scope of the invention that the die and/or reactor exit bore be of constant dimensions, or varying dimensions. The initial dimensions of a rectangular slit, for example may in effect be larger at the inlet side, than they are at the exit side. It is also contemplated within the scope of the invention that irregular shaped exit bores can be accommodated. The critical parameter is that the surface area of the horn be sufficient to be capable of being positioned over the exit bore shape, whether the exit bore is that of the reactor or that of the die.

The effective devulcanization of the rubber requires a careful analysis of the die inlet bore diameter, the die exit bore diameter and the ultrasonic horn diameter. In order to effectively devulcanize the material, it is critical that the horn diameter be larger than the die inlet bore, yet smaller than the die exit bore. This arrangement permits the die to be inserted to a depth into the die exit bore which effectively devulcanizes the material, yet simultaneously does not generate an inordinate amount of pressure within the die of the reactor, thereby causing the horn to stop vibrating.

While in accordance with the patent statutes, a preferred embodiment and best mode has been presented, the scope of the invention is not limited thereto, but rather is measure by the scope of to attached claims.

**Claims**

1.  An ultrasonic reactor comprising:

    a reactor (20) having at least one reactor exit bore (36) capable of continuously feeding vulcanized or crosslinked elastomeric particles under pressure to the reactor exit bore (36); characterised in having at least one ultrasonic horn (15) for each reactor exit bore (36);
    at least one attachment means (18) for attaching each ultrasonic horn (15) to the reactor (20) and in a linear relationship with a longitudinal axis of the at least one reactor exit bore (36); and
    an ultrasonic wave generator (10) at one end of each ultrasonic horn (15), a diameter of the wave generator being larger than the diameter of the reactor exit bore, a tip of the ultrasonic wave generator additionally being positioned at a clearance distance (c) as measured along the longitudinal axis of the reactor exit bore sufficient to effect devulcanization or decrosslinking of the elastomer particles.

2. The ultrasonic reactor of claim 1 wherein the at least one reactor exit bore (36) further comprises:

at least one die (16) having a die entrance bore (38) and a die exit bore (37), the die entrance bore (38) being of smaller diameter than the die exit bore (37), the die being attached to the reactor so as to permit the passage of the vulcanized elastomeric particles from the reactor exit bore (36) into the die entrance bore (38); and wherein
a diameter of the wave generator ($d_h$) is larger than the diameter of the die entrance bore ($d_i$) and smaller than the diameter of the die exit bore ($d_e$); and further wherein
a tip of the ultrasonic wave generator is positioned at the clearance distance (c) as measured along the longitudinal axis of the die exit bore (37) between a transverse plane demarking a termination of the die entrance bore (38) and a transverse plane demarking the tip of the ultrasonic wave generator (10), said clearance distance (c) being sufficient to effect devulcanization or decrosslinking of the elastomer.

3. The ultrasonic reactor of claim 1 wherein the at least one reactor exit bore (36) further comprises:

at least one die (16) in non-longitudinal alignment (46,48) with a longitudinal axis of the reactor having a die entrance bore (38) and a die exit bore (37), the die entrance bore (38) being of smaller diameter than the die exit bore (37), the die being attached to the reactor so as to permit the passage of the vulcanized elastomeric particles from the reactor exit bore (36) into the die entrance bore (38); and wherein
a diameter of the wave generator ($d_h$) is larger than the diameter of the die entrance bore ($d_i$) and smaller than the diameter of the die exit bore ($d_e$); and further wherein
a tip of the ultrasonic wave generator is positioned at the clearance distance (c) as measured along the longitudinal axis of the die exit bore (37) between a transverse plane demarking a termination of the die entrance bore (38) and a transverse plane demarking the tip of the ultrasonic wave generator (10), said clearance distance (c) being sufficient to effect devulcanization or decrosslinking of the elastomer.

4. The ultrasonic reactor of claim 1 wherein the at least one reactor exit bore (36) further comprises:

at least one die (16) having a die entrance bore, a die exit bore and an internal die void (54) connecting the die entrance and exit bores, the die being attached to the reactor so as to permit the passage of the vulcanized elastomeric particles from the reactor exit bore into the die entrance bore; and wherein
a diameter of the wave generator ($d_h$) is larger than the diameter of the die entrance bore; and further wherein
a tip of the ultrasonic wave generator is positioned at a clearance distance (c) as measured along the longitudinal axis of the die exit bore between a transverse plane demarking a termination of the ultrasonic wave generator tip and a transverse plane demarking the beginning of the die entrance bore, said clearance distance being sufficient to effect devulcanization or decrosslinking of the elastomer particles.

5. The ultrasonic reactor of claim 1 wherein the at least one reactor exit bore further comprises:

a die chamber having two parallel-spaced die walls (58) attached to the reactor (20) and to a die exit wall, at least one ultrasonic wave generator surface (15) having at least one ultrasonic horn (10) in a parallel-spaced relationship with a third die wall (58), both the wave generator surface (15) and third die wall (58) in associative contact with the two parallel-spaced die walls and die exit wall, creating a channel (60) through which elastomeric particles can be fed and exited through an exit bore in an exit wall;
at least one spacing means for attaching the ultrasonic horn to the die wall and permitting variable positioning of the at least one ultrasonic wave generator surface in a linear relationship to a longitudinal axis of the reactor exit bore, thereby creating a clearance distance (c) as measured between the wave generator surface (15) and third wall (58) sufficient to effect devulcanization of the elastomer.

6. The ultrasonic reactor of claims 1 or 2 or 3 or 4 or 5 wherein the clearance distance is 0.2mm to 0.8mm.

7. The ultrasonic reactor of claim 5 wherein the third wall (58) of the die chamber is an ultrasonic wave generator surface.

8. The reactor of claim 7 wherein the clearance distance is 0.2mm to 1.6mm.

9. A continuous process for the recycling of vulcanized elastomeric particles or crosslinked thermoset polymers comprising the steps of:

   feeding vulcanized or crosslinked elastomer particles into a pressurized zone; and
   ultrasonically treating the elastomers in the zone with an ultrasonic wave propagated co-axially with the zone for a time from about 0.1 seconds to about 10 seconds to effect breaking at least a covalent bond selected from the group consisting of a carbon-carbon bond, carbon-sulfur bond and a sulfur-sulfur bond.

10. The process of claim 9 wherein a pressure is from about 10 psig to about 10,000 psig.

11. The process of claim 9 wherein the pressure is from about 400 psig to about 1,500 psig.

12. The process of claim 9 wherein a temperature is from about 25°C to about 300°C.

13. The process of claim 9 wherein an amplitude of the ultrasonic wave is from about 10 microns to about 200 microns.

**Patentansprüche**

1. Ultraschallreaktor, umfassend einen Reaktor (20) mit mindestens einer Reaktorausgangsbohrung (36), der zur kontinuierlichen Zuführung vulkanisierter oder vernetzter elastomerer Teilchen unter Druck zu der Reaktorausgangsbohrung (36) befähigt ist,
   **gekennzeichnet durch**

   mindestens ein Ultraschallhorn (15) für jede Reaktorausgangsbohrung (36),
   mindestens ein Befestigungsmittel (18) für die Befestigung jedes Ultraschallhorns (15) an dem Reaktor (20) und in einer linearen Beziehung mit einer Längsachse der mindestens einen Reaktorausgangsbohrung (36), und
   einen Ultraschallwellengenerator (10) an einem Ende jedes Ultraschallhorns (15), wobei ein Durchmesser des Wellengenerators größer ist als der Durchmesser der Reaktorausgangsbohrung, wobei eine Spitze des Ultraschallwellengenerators zusätzlich in einen Spaltabstand (c) angeordnet ist, gemessen entlang der Längsachse der Reaktorausgangsbohrung, der ausreichend ist, um Devulkanisierung oder Entnetzen der Elastomerteilchen herbeizuführen.

2. Ultraschallreaktor nach Anspruch 1, worin die mindestens eine Reaktorausgangsbohrung (36) weiterhin umfaßt:

   mindestens ein Werkzeug (16) mit einer Werkzeugeingangsbohrung (38) und einer Werkzeugausgangsbohrung (37), wobei die Werkzeugeingangsbohrung (38) einen kleineren Durchmesser als die Werkzeugausgangsbohrung (37) aufweist, wobei das Werkzeug so an dem Reaktor angebracht ist, daß der Durchtritt der vulkanisierten elastomeren Teilchen aus der Reaktorausgangsbohrung (36) in die Werkzeugeingangsbohrung (38) gestattet wird, und worin
   ein Durchmesser ($d_h$) des Wellengenerators größer ist als der Durchmesser ($d_i$) der Werkzeugeingangsbohrung und kleiner ist als der Durchmesser ($d_e$) der Werkzeugausgangsbohrung, und worin weiterhin
   eine Spitze des Ultraschallwellengenerators in dem Spaltabstand (c) angeordnet ist, der gemessen ist entlang der Längsachse der Werkzeugausgangsbohrung (37) zwischen einer ein Ende der Werkzeugeingangsbohrung (38) begrenzenden Querebene und einer die Spitze des Ultraschallwellengenerators (10) begrenzenden Querebene, wobei der Spaltabstand (c) ausreichend ist, um Devulkanisierung oder Entnetzen des Elastomers herbeizuführen.

3. Ultraschallreaktor nach Anspruch 1, worin die mindestens eine Reaktorausgangsbohrung (36) weiterhin umfaßt:

   mindestens ein Werkzeug (16) in nicht-längsgerichteter Ausfluchtung (46, 48) mit einer Längsachse des Reaktors, das eine Werkzeugeingangsbohrung (38) und eine Werkzeugausgangsbohrung (37) besitzt, wobei die Werkzeugeingangsbohrung (38) im Durchmesser kleiner ist als die Werkzeugausgangsbohrung (37), wobei das Werkzeug so an dem Reaktor angebracht ist, daß der Durchtritt der vulkanisierten elastomeren Teilchen aus der Reaktorausgangsbohrung (36) in die Werkzeugeingangsbohrung (38) gestattet wird, und worin
   ein Durchmesser ($d_h$) des Wellengenerators größer ist als der Durchmesser ($d_i$) der Werkzeugeingangsboh-

rung und kleiner ist als der Durchmesser ($d_e$) der Werkzeugausgangsbohrung, und worin weiterhin

eine Spitze des Ultraschallwellengenerators in dem Spaltabstand (c) angeordnet ist, der gemessen ist entlang der Längsachse der Werkzeugausgangsbohrung (37) zwischen einer ein Ende der Werkzeugeingangsbohrung (38) begrenzenden Querebene und einer die Spitze des Ultraschallwellengenerators (10) begrenzenden Querebene, wobei der Spaltabstand (c) ausreichend ist, um Devulkanisierung oder Entnetzen des Elastomers herbeizuführen.

4. Ultraschallreaktor nach Anspruch 1, worin die mindestens eine Reaktorausgangsbohrung (36) weiterhin umfaßt:

mindestens ein Werkzeug (16) mit einer Werkzeugeingangsbohrung, einer Werkzeugausgangsbohrung und einem inneren, die Werkzeugeingangs- und -ausgangsbohrungen verbindenden Werkzeughohlraum (54), wobei das Werkzeug so an dem Reaktor angebracht ist, daß der Durchtritt der vulkanisierten elastomeren Teilchen aus der Reaktorausgangsbohrung in die Werkzeugeingangsbohrung gestattet wird, und worin ein Durchmesser ($d_h$) des Wellengenerators größer ist als der Durchmesser der Werkzeugeingangsbohrung, und worin weiterhin eine Spitze des Ultraschallwellengenerators in einem Spaltabstand (c) angeordnet ist, der gemessen ist entlang der Längsachse der Werkzeugausgangsbohrung zwischen einer ein Ende der Ultraschallwellengeneratorspitze begrenzenden Querebene und einer den Beginn der Werkzeugeingangsbohrung begrenzenden Querebene, wobei der Spaltabstand ausreichend ist, um Devulkanisierung oder Entnetzen der Elastomerteilchen herbeizuführen.

5. Ultraschallreaktor nach Anspruch 1, worin die mindestens eine Reaktorausgangsbohrung weiterhin umfaßt:

eine Werkzeugkammer mit zwei parallel beabstandeten Werkzeugwänden (58), die an dem Reaktor (20) und an einer Werkzeugausgangswand angebracht sind, mindestens eine Ultraschallwellengeneratorfläche (15) mit mindestens einem Ultraschallhorn (10) in einer parallel beabstandeten Anordnung mit einer dritten werkzeugwand (58), wobei sowohl die Wellengeneratorfläche (15) als auch die dritte Wand (58) in assoziativem Kontakt mit den beiden parallel beabstandeten Werkzeugwänden und der Werkzeugausgangswand stehen, wodurch ein Kanal (60) gebildet wird, durch welchen elastomere Teilchen zugeführt und durch eine Ausgangsbohrung in einer Ausgangswand ausgegeben werden können, mindestens einem Abstandsmittel für die Anbringung des Ultraschallhorns an der Werkzeugwand und die Ermöglichung variabler Positionierung der mindestens einen Ultraschallwellengeneratorfläche in einer linearen Beziehung zu einer Längsachse der Reaktorausgangsbohrung, wodurch ein Spaltabstand (c), gemessen zwischen der Wellengeneratorfläche (15) und dritter Wand (58), erzeugt wird, der ausreichend ist, um Devulkanisierung des Elastomers herbeizuführen.

6. Ultraschallreaktor nach Anspruch 1 oder 2 oder 3 oder 4 oder 5, worin der Spaltabstand 0,2 bis 0,8 mm beträgt.

7. Ultraschallreaktor nach Anspruch 5, worin die dritte Wand (58) der Werkzeugkammer eine Ultraschallwellengeneratorfläche ist.

8. Ultraschallreaktor nach Anspruch 7, worin der Spaltabstand 0,2 bis 1,6 mm beträgt.

9. Kontinuierliches Verfahren für das Recycling von vulkanisierten elastomeren Teilchen oder vernetzten warmausgehärteten Polymeren, umfassend die Schritte:

Zuführen vulkanisierter oder vernetzter elastomerer Teilchen in eine unter Druck gesetzte Zone, und Untraschallbehandeln der Elastomeren in der Zone mit einer Ultraschallwelle, die koaxial mit der Zone für eine Zeit von etwa 0,1 Sekunden bis etwa 10 Sekunden übertragen wird, um Brechen mindestens einer kovalenten Bindung, ausgewählt aus der Gruppe bestehend aus einer Kohlenstoff-Kohlenstoff-Bindung, Kohlenstoff-Schwefel-Bindung und einer Schwefel-Schwefel-Bindung, herbeizuführen.

10. Verfahren nach Anspruch 9, worin ein Druck von etwa 0,7 bar bis etwa 689 bar zur Anwendung kommt.

11. Verfahren nach Anspruch 9, worin der Druck von etwa 27,5 bar bis etwa 103,5 bar beträgt.

12. Verfahren nach Anspruch 9, worin eine Temperatur von etwa 25°C bis etwa 300°C zur Anwendung kommt.

**14**

**13.** Verfahren nach Anspruch 9, worin eine Amplitude der Ultraschallwelle von etwa 10 µm bis etwa 200 µm beträgt.

**Revendications**

**1.** Réacteur à ultrasons, comportant :

un réacteur (20) ayant au moins un alésage de sortie de réacteur (36) capable d'alimenter en continu des particules d'élastomère vulcanisées ou réticulées sous pression vers l'alésage de sortie de réacteur (36), caractérisé en ce qu'il comporte au moins une électrode à ultrasons (15) pour chaque alésage de sortie de réacteur (36),
au moins des premiers moyens de fixation (18) destinés à fixer chaque électrode à ultrasons (15) sur le réacteur (20) et dans une disposition linéaire par rapport à l'axe longitudinal du au moins un alésage de sortie de réacteur (36), et
un générateur d'onde ultrasonore (10) situé à une première extrémité de chaque électrode à ultrasons (15), un diamètre du générateur d'onde étant plus grand que le diamètre de l'alésage de sortie du réacteur, une extrémité du générateur d'onde ultrasonore étant de plus positionnée à une distance d'espacement (c), telle que mesurée le long de l'axe longitudinal de l'alésage de sortie du réacteur, suffisante pour effectuer une dévulcanisation ou une déréticulation des particules d'élastomère.

**2.** Réacteur à ultrasons selon la revendication 1, dans lequel au moins un alésage de sortie de réacteur (36) comporte en outre ;

au moins une filière (16) ayant un alésage d'entrée de filière (38) et un alésage de sortie de filière (37), l'alésage d'entrée de filière (38) ayant un diamètre plus petit que l'alésage de sortie de filière (37), la filière étant fixée sur le réacteur de manière à permettre le passage des particules d'élastomère vulcanisées depuis l'alésage de sortie de réacteur (36) jusqu'à l'intérieur de l'alésage d'entrée de filière (38), et dans lequel
un diamètre du générateur d'onde ($d_h$) est plus grand que l'alésage d'entrée de filière ($d_i$) et plus petit que le diamètre de l'alésage de sortie de filière ($d_e$), et en outre dans lequel une extrémité du générateur d'onde ultrasonore est positionnée au niveau d'une distance d'espacement (c), telle que mesurée le long de l'axe longitudinal de l'alésage de sortie de filière (37), entre un plan transversal définissant une extrémité de l'alésage d'entrée de filière (38) et un plan transversal définissant l'extrémité du générateur d'onde ultrasonore (10), ladite distance d'espacement (c) étant suffisante pour effectuer une dévulcanisation ou une déréticulation de l'élastomère.

**3.** Réacteur à ultrasons selon la revendication 1, dans lequel le au moins un alésage de sortie de réacteur (36) comporte en outre :

au moins une filière (16) en alignement non-longitudinal (46, 48) avec l'axe longitudinal du réacteur, ayant un alésage d'entrée de filière (38) et un alésage de sortie de filière (37), l'alésage d'entrée de filière (38) ayant un diamètre plus petit que l'alésage de sortie de filière (37), la filière étant fixée sur le réacteur de manière à permettre le passage des particules d'élastomère vulcanisées depuis l'alésage de sortie de réacteur (36) jusqu'à l'intérieur de l'alésage d'entrée de filière (38), et dans lequel
un diamètre du générateur d'onde ($d_h$) est plus grand que le diamètre de l'alésage d'entrée de filière ($d_i$) et plus petit que le diamètre de l'alésage de sortie de filière ($d_e$), et de plus dans lequel
une extrémité du générateur d'onde ultrasonore est positionnée à une distance d'espacement (c), telle que mesurée le long de l'axe longitudinal de l'alésage de sortie de filière (37), entre un plan transversal définissant une extrémité de l'alésage d'entrée de filière (38) et un plan transversal indiquant l'extrémité du générateur d'onde ultrasonore (10), ladite distance d'espacement (c) étant suffisante pour effectuer une dévulcanisation ou une déréticulation de l'élastomère.

**4.** Réacteur à ultrasons selon la revendication 1, dans lequel le au moins un alésage de sortie de réacteur (36) comporte de plus :

au moins une filière (16) ayant un alésage d'entrée de filière, un alésage de sortie de filière et un vide interne de filière (54) reliant les alésages d'entrée et de sortie de filière, la filière étant fixée sur le réacteur de manière à permettre le passage de particules d'élastomère vulcanisées depuis l'alésage de sortie de réacteur jusqu'à l'intérieur de l'alésage d'entrée de filière, et dans lequel
un diamètre du générateur d'onde ($d_h$) est plus grand que le diamètre de l'alésage d'entrée de filière, et en outre dans lequel

une extrémité du générateur d'onde ultrasonore est positionnée à une distance d'espacement (c), telle que mesurée le long de l'axe longitudinal de l'alésage de sortie de filière, entre un plan transversal définissant une extrémité du bout de générateur d'onde ultrasonore et un plan transversal définissant le début de l'alésage d'entrée de filière, ladite distance d'espacement étant suffisante pour effectuer une dévulcanisation ou une déréticulation des particules d'élastomère.

5.  Réacteur à ultrasons selon la revendication 1, dans lequel le au moins un alésage de sortie de réacteur comporte en outre :

une chambre de filière ayant deux parois de filière parallèles espacées (58) fixées sur le réacteur (20) et sur une paroi de sortie de filière, au moins une surface de générateur d'onde ultrasonore (15) ayant au moins une électrode à ultrasons (10) selon une disposition parallèle espacée par rapport à une troisième paroi de filière (58), à la fois la surface de générateur d'onde (15) et la troisième paroi de filière (58) en contact associatif avec les deux parois de filière parallèles espacées et la paroi de sortie de filière, créant un canal (60) à travers lequel des particules d'élastomère peuvent être acheminées et sortir à travers un alésage de sortie d'une paroi de sortie,
au moins des premiers moyens d'espacement pour fixer l'électrode à ultrasons sur la paroi de filière et permettre le positionnement variable de la au moins une surface de générateur d'onde ultrasonore selon une disposition linéaire par rapport à l'axe longitudinal de l'alésage de sortie de réacteur, en créant ainsi une distance d'espacement (c), telle que mesurée entre la surface de générateur d'onde (15) et la troisième paroi (58), suffisante pour effectuer une dévulcanisation de l'élastomère.

6.  Réacteur à ultrasons selon la revendication 1 ou 2 ou 3 ou 4 ou 5, dans lequel la distance d'espacement est de 0,2 mm à 0,8 mm.

7.  Réacteur à ultrasons selon la revendication 5, dans lequel la troisième paroi (58) de la chambre de filière est une surface de générateur d'onde ultrasonore.

8.  Réacteur selon la revendication 7, dans lequel la distance d'espacement est de 0,2 mm à 1,6 mm.

9.  Procédé continu pour le recyclage de particules d'élastomère vulcanisées ou de polymères thermodurcis réticulés comportant les étapes consistant à :

acheminer des particules d'élastomère vulcanisées ou réticulées dans une zone sous pression, et
traiter par ultrasons les élastomères situés dans la zone à l'aide d'une onde ultrasonore propagée coaxialement à la zone sur un temps allant d'environ 0,1 seconde à environ 10 secondes pour effectuer une rupture d'au moins une liaison covalente sélectionnée parmi le groupe constitué d'une liaison carbone-carbone, une liaison carbone-soufre et une liaison soufre-soufre.

10. Procédé selon la revendication 9, dans lequel la pression est d'environ 7 kPa à 7 MPa (10 psig à environ 10000 psig).

11. Procédé selon la revendication 9, dans lequel la pression est d'environ 280 kPa à 1050 kPa (400 psig à environ 1500 psig).

12. Procédé selon la revendication 9, dans lequel la température est d'environ 25°C à environ 300°C.

13. Procédé selon la revendication 9, dans lequel l'amplitude de l'onde ultrasonore est d'environ 10 microns à environ 200 microns.

FIG.—1

FIG.—2

FIG.—3

EP 0 647 240 B1

FIG.-4

FIG.-5

FIG.-6

FIG.-7

FIG.-8

FIG.-9

FIG.-10

FIG.-11

20

FIG.-12

FIG.-13

## FIG.-14

FIG.-15

FIG.-16

FIG.-17

FIG.-18

FIG.-19